## Europäisches Patentamt
## European Patent Office
## Office européen des brevets

(19)

(11) Publication number: **0 160 559**
**B1**

(12)

# EUROPEAN PATENT SPECIFICATION

(45) Date of publication of the patent specification:
24.08.88

(51) Int. Cl.⁴: **F 16 L 21/08**, F 16 L 37/08

(21) Application number: 85303021.1

(22) Date of filing: 29.04.85

(54) Tubing joint.

(30) Priority: 30.04.84 JP 88174/84

(43) Date of publication of application:
06.11.85 Bulletin 85/45

(45) Publication of the grant of the patent:
24.08.88 Bulletin 88/34

(84) Designated Contracting States:
AT BE CH DE FR GB IT LI LU NL SE

(56) References cited:
DE - A - 2 413 749
DE - A - 2 427 570
FR - A - 2 283 381
FR - A - 2 398 251
GB - A - 2 066 914

(73) Proprietor: **Kabushiki Kaisha Nihon Pisco, 5276-1,
Osachi, Okaya-shi Nagano-ken (JP)**

(72) Inventor: **Hama, Tomio, c/o 5276-1, Osachi, Okaya-shi
Nagano-ken (JP)**
Inventor: **Yamakazi, Kiyoyasu, c/o 5276-1, Osachi,
Okaya-shi Nagano-ken (JP)**

(74) Representative: **Harrison, David Christopher et al,
MEWBURN ELLIS & CO 2/3 Cursitor Street, London
EC4A 1BQ (GB)**

## Description

Various structures have been devised for tubing joints which connect flexible tubings for transferring liquids.

In conventional tubing joints, several, say four, lock claws are provided at regular intervals around the circumference of an inner wall of the joint and each claw slants forward from the tubing-admitting opening. When a tube is inserted, the tip of each chlaw is pushed outward by the wall of the tube; but when a tube once inserted tries to move in the tube withdrawal direction, frictional force, etc. will cause the claws to bite the outer wall of the tubing to prevent disengagement.

To effect the withdrawal of a tubing, the tubing joint is provided with a releasing means such as a releasering, which is designed to push the tips of the claws outward to free the tubing from their biting action.

The above-mentioned conventional structure for the tubing joint requires the claw itself to be rigid to a considerable degree. Thick materials have been used to provide the required rigidity and the form of the tip of the claw has been modified, for example, into the form of a sharp blade to promote its capacity for biting into the outer wall of a tubing.

The above-described structure using claws of high rigidity but low elasticity has the disadvantage that, if the claw starts to slide on the outer wall of an inserted tube, the claw will adjust itself only with difficulty to the movement of the tube, resulting in a lowered degree of bite onto the tube. This disadvantage is enhanced when the tube is made of a relatively hard material. It is true that a claw, when made thin, is capable of adjusting itself to the movement of the tubing, but such claws are of low rigidity.

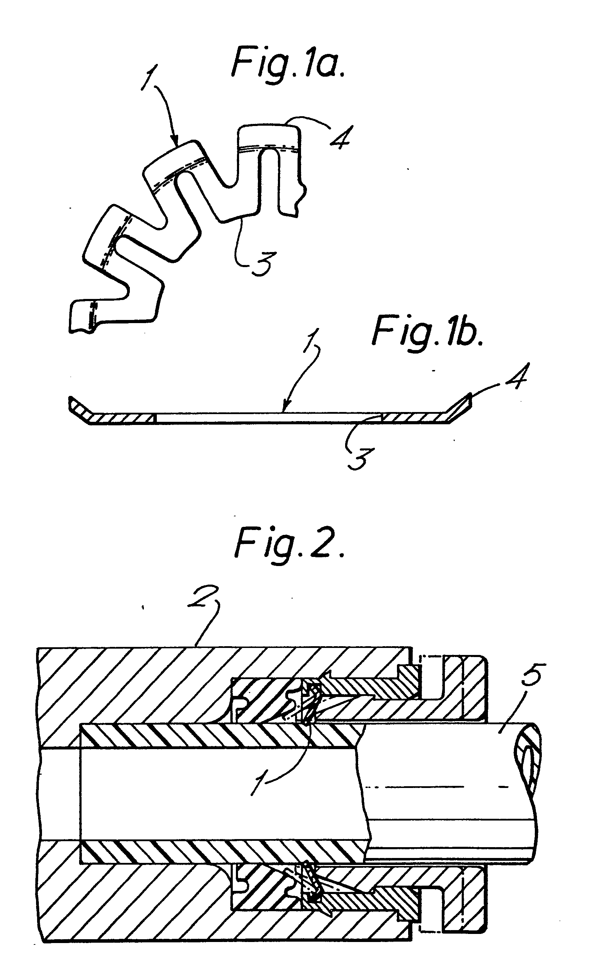

We have already devised a tubing joint of the same type as that described above, using, instead of the rigid claws as described above, a catching piece 1 shown in fig. 1, for which an elastic plate of a material such as thin phosphor bronze is punched into a zigzag ring, the outer extremities 4 of which are bent into a stretched or open L shape; a similar ring is used in the tubing joint shown in JP-A-5881293.

The above-mentioned catching piece 1 has the advantages that, since it is made of thin elastic plate, it can easily catch the outer wall of a tube 5 by means of its inner extremities 3; that it can follow the movement of a tube with assurance of bite since it is flexible, and that it may still exhibit some rigidity since its outer extremities 4 are bent in a stretched L form.

However, we have now found that the above-described catching piece 1 has a disadvantage which results from the ease with which it can follow the movement of the outer surface of an inserted tube.

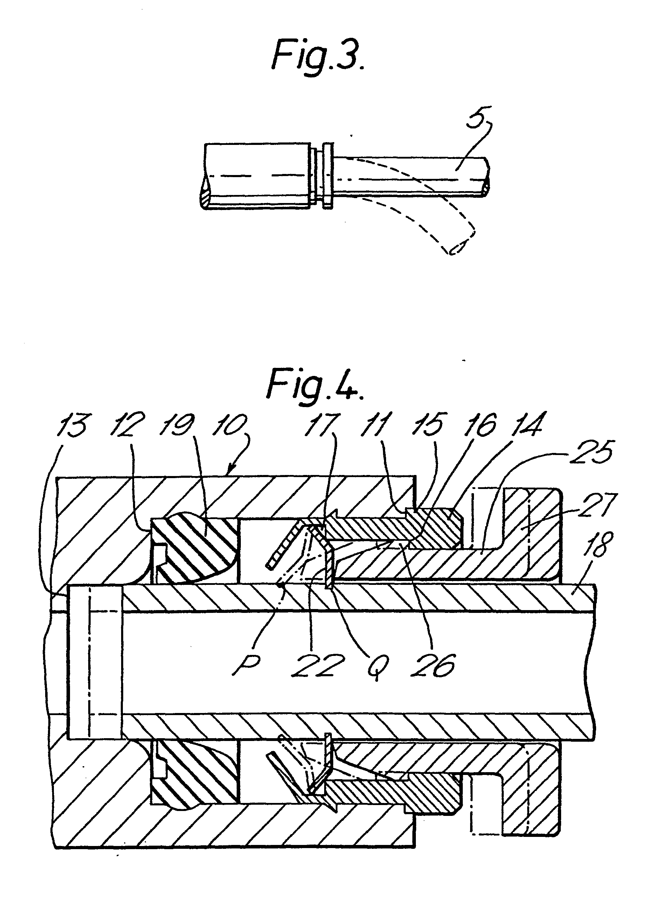

Referring to fig. 3, a flexible tube 5, when used, for example, as a fluid supply tubing for a robot device is often bent from the straight into an arc. In this bent condition there will gradually be produced a deviation between the inner and outer sides of the bend among the inner extremities of the catching piece 1 biting the outer wall of the tube 5; then there will be formed grooves in a partial spiral on the outer wall of the tube 5, and the tube is likely to come out of the joint if it happens to be turned about its axis. In addition, if the tube 5 is made of a relatively hard material such as nylon and accordingly the inner extremities of the catching piece 1 bite only shallowly, the tube 5 will possible be able to slide out.

The present invention relates to an improvement of the above-described tubing joint and has as object to offer a tubing joint which allows its catching piece to bite the outer wall of a tubing more securely, thus ensuring the tubing connection.

It achieves this by positioning the release ring (which can abut the claws when they are biting an inserted tube and there is an attempt to withdraw the tube) such that its axially outermost position is one where the claws have passed their condition of maximum bite.

In the accompanying drawings

figs. 1a and 1b are illustrative views of the catching piece of our prior art;

fig. 2 is a sectional view of a conventional tubing joint;

fig. 3 is an illustrative view of the catching piece of fig. 1 in operation;

fig. 4 is a sectional view of a tubing joint according to the present invention;

figs. 5a and 5b are illustrative views of the catching piece for the tubing joint of fig. 4; and

fig. 6 is an illustrative view of a guide-ring and catching piece for the tubing joint of fig. 4.

The preferred embodiment of the present invention will be described below in detail by reference to the accompanying drawings.

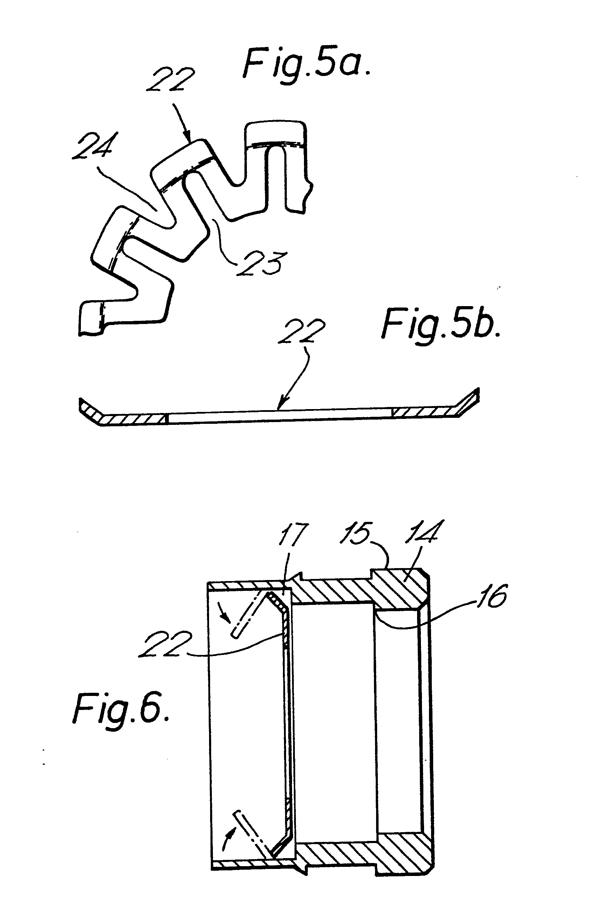

Referring to fig. 4, the joint 10 is approximately cylindrical and is provided on its inner wall with a first step 11, a second step 12, and a third step 13 at successively farther positions from a tubing-admitting opening, with successive reduction in inner diameter. A guide-ring 14 is approximately cylindrical and is fixed inside the joint 10 with its collar 15 in contact with the first step 11. The guide-ring 14 has a control step 16 on the middle of its inner wall and, at its innermost position, it has a circular groove 17. The second step 12 makes the joint 10 equal in inner diameter to a piece of nylon or polyurethane tube 18 to be inserted and, on the other hand, the third step 13 sets an end position of the tube 18 to be inserted.

An elastic sleeve 19, in an approximate cylinder made of an elastomeric material such as rubber, is held inside the joint 10 so that the outer wall of the tube 18 inserted into the joint may come into sealing contact with a flange of the sleeve 19.

A catching piece 22, as seen from fig. 5, is prepared by punching a ring out of a thin (ca 0.2 mm) plate of an elastic material such as phosphor bronze and by making a number of radial notches 23 and 24 alternately from the inner and outer extremities of the ring so that it becomes a zigzag ring.

In the present invention, the outer peripheral portion with the notches 24 formed is bent over a predetermined width in the same direction so as to have a sectional shape of a stretched or open L (fig. 5b).

The catching piece 22 is put in the circular groove 17 so that the bending direction of its outer extremity is in the direction of admission of the tubing. With no tube 18 inserted, the piece 22 is in the state of no deformation, i.e. its inner peripheral portion is in a single plane normal to the axial line of the joint 10.

A release-ring 25 is also approximately cylindrical and is supported by the guide ring 14 in such a way that it is movable in the axial direction until its enlarged-diameter step 26 comes into contact with a control step 16 of the guide-ring 14 or until its collar 27 comes into touch with the end face of the guidering 14. The portion of the ring 25 beyond the enlarged-diameter step 26 ist tapered toward the innermost end. The dimensions of the release-ring 25 are such that, while the releasering 25 has its enlarged-diameter step 26 in contact with the control step 16, the end of the outer side of the release-ring 25 may be just in contact with or at a short distance from the inner extremity side of the catching piece 22.

With the above-described structure, when the tubing 18 is inserted into the joint 10 through the ring 25, it advances under the elastic force of the inner extremities of the piece 22, pushing outward the inner extremities of the piece 22, until it hits the third step 13. During this process, the tubing 18 being inserted will push the piece 22 but, since the outer extremities of the zigzags are bent in the direction of the insertion of tube 18 (i.e. so as to press the inner wall of the circular groove 17 under the pressing force from the tube 18) the catching piece 22 will not displace from the circular groove 17 even under the pressing force from the tube 18, and the inner extremities will be capable of repeated expansion by a prescribed angle even upon repeated insertion of tubing. Therefore the inner extremities of the the catching piece 22 will come into contact with the outer wall of the tubing 18 with a predetermined tilt and will bite the outer wall of the tubing 18 by the action of their elastic force, resulting in the usual prevention of the disengagement of the tubing 18. At this stage the inner extremities are positioned at P (fig. 4). Now, the tubing 18 is pulled back slightly in the withdrawal direction. The inner extremities continue to bite the outer wall of the tube 18 and will be caused to move together with the tube 18, making an arcuate movement about the outer extremities of the piece 22 as a fulcrum. They will pass the maximum bite position where the line connecting the outer and inner extremities is vertical to the outer wall of the tubing 18 and finally reach the position Q (fig. 4) where the inner extremities are positioned close to the front end of the release-ring 25 when this has its enlarged-diameter step 26 in contact with the control step 16. Although the position Q is slightly beyond the maximum bite position described above the amount of bite of the inner extremities onto the outer wall of the tubing 18 is more at the position Q than at the position P, i.e. an adequate prevention of disengagement of the tube 18 is provided at the position Q. If the tube at the position Q is pulled, the inner extremities will go practically to the vertical in relation to the outer wall of the tube 18 without letting the tube 18 slide out and, at the same time, the face of the inner peripheral portion will be controlled by the front end of the release-ring 25 so as not to continue their arcuate rotation (flexion), i.e. the front end of the release-ring 25 serves as a stop for that face. On the other hand, if the tube 18 at the position Q were to be pushed inward, the inner extremities will never go to the position P since the positional shift from Q to P requires the maximal bite position of the inner extremities to be passed. Thus, the inner extremities are positioned at their preferred position, the same as if no tube were inserted, biting the outer wall of the tube 18 in a locked state and preventing disengagement of the tube 18.

As described above, the inner extremities of the piece 22 are locked when they have passed slightly beyond their maximum bite position on the outer wall of the tube 18 and get into contact with the front end of the release-ring 25. Therefore even when the tube 18 has been deformed from a straight to an arcuate form (as shown in fig. 3), the inner extremities will never get displaced on the outer wall of the tubing, or no spiral traces will be formed which would allow the helical disengagement of the tubing.

In the process of the P-to-Q positional shift, if the bite onto the tube 18 at the position P has been so insufficient that the tube 18 slid, a secure connection of the tube 18 may be effected by pushing it in again and then re-trying a P-to-Q positional shift until the bite is confirmed.

For the withdrawal of the tube 18 pushing the release-ring 25 as it is will not be easy since the piece 22 has been in the locked state. As a first step the tube 18 is first to be pushed in, which operation will easily return the inner extremities of the piece 22 from the position Q to P. This step is then to be followed by pushing the release-ring 25 in the usual way; which operation will release the bite of the inner extremities permitting resulting detachment of the tube 18.

Fig. 6 illustrates how to assemble the piece 22 in the circular groove 17 and the guide-ring 14.

The end section of the guide-ring 14 is previously formed as a thin-walled cylinder. The piece 22 is put into this cylinder and then the end section of the cylinder is pressed into a wavy shape to form the circular groove 17, which keeps the piece 22 from disengagement.

The inner wall of the pressed-in section of the cylinder serves to prevent the inner extremities of the catching piece 22 from being deformed beyond its elastic limit.

In summary the tubing joint has the advantages that bite of the catching piece onto the outer wall of an inserted tube is secured since the inner extremities of the catching piece are brought into a locked state between a position slightly beyond the maximal bite position on the outer wall of tubing and the end of the release-ring; a secure tubing connection may be obtained irrespective of the hardness of the material for the tubings to be connected; the detachment of the tubings once connected is easily performed; and that even if the tube is bent, disengagement of the tube should never occur.

**Claims**

1. A tubing joint which includes:
a catching piece (22) with claws to bite into a tube (18) inserted into said joint to prevent said inserted tubing from moving out again; and

a release ring (25), axially movable into said tubing joint so as to release the bite of the claws;

a stop (16) defining an axially outermost position of the release-ring (25);

the claws being an inner peripheral portion of a zigzag ring (22) having a number of notches formed alternately in the inner and outer circumference of said ring,

the outer peripheral portion being bent out of the plane of the inner peripheral portion;

the release-ring in its axially outermost position being abutted by the claws of the zigzag ring (22) in their axially outermost position (Q) when biting into an inserted tube (18);

characterized in that

the said axially outermost position (Q) is slightly axially outwardly of a position of maximum bite of the claws.

2. A tubing joint according to claim 1 wherein the outer peripheral portion of the catching piece (22) is held within a guide-ring (14) which has the stop (16) for defining the axially outermost position of the release-ring (25).

3. A tubing joint according to claim 2 wherein said piece (22) is held by inward deformation of an end portion of the guide ring (14).

## Patentansprüche

1. Eine Rohrverbindung, welche ein Sperrstück (22) mit in ein, in diese Verbindung eingesetztes Rohr (18) zu beißenden Krallen zum Verhindern, daß sich das eingesetzte Rohr wieder herausbewegt und einen zum Lösen des Bisses der Krallen in diese Rohrverbindung axial hineinbewegbaren Lösering (25), einem eine äußerste axiale Position des Löseringes (25) definierenden Anschlag (16) umfaßt, wobei die Krallen einen inneren Umfangsabschnitt eines Zickzackringes (22) mit einer Anzahl abwechselnd am Innen- und Außenumfang dieses Ringes geformter Kerben bilden, dessen äußerer Umfangsabschnitt aus der Ebene des inneren Umfangsabschnittes herausgebogen ist, wobei der Lösering in seiner äußersten axialen Position von den Krallen des Zickzackringes (22), in deren beim Beißen in ein eingesetztes Rohr (18) äußersten axialen Position (Q) angestoßen werden, dadurch gekennzeichnet, daß besagte äußerste axiale Position (Q) axial knapp außerhalb einer Position des maximalen Bisses der Krallen liegt.

2. Eine Rohrverbindung gemäß Anspruch 1, wobei der äußere Umfangsabschnitt des Sperrstückes (22) innerhalb eines, den die äußerste axiale Position des Löseringes (25) definierenden Anschlag (16) enthaltenden Führungsring (14) gehalten ist.

3. Eine Rohrverbindung gemäß Anspruch 2, wobei besagtes Stück (22) duch eine Einwärtsverformung eines Endabschnittes des Führunsringes (14) gehalten ist.

## Revendications

1. Jonction de tubes qui comprend:

une pièce d'accrochage (22) dont les mâchoires mordent dans un tube (18) inséré dans ladite jonction pour éviter que ledit tube inséré n'en ressorte; et

un anneau de dégagement (25) mobile axialement dans ladite jonction de tubes de manière à dégager la pénétration des mâchoires,

une butée (16) définissant une position axialement le plus à l'extérieur de l'anneau de dégagement (25),

les mâchoires étant constituées par les portions périphériques internes d'un anneau en zigzag (22) comprenant un certain nombre d'encoches formées alternativement dans les circonférences interne et externe dudit anneau;

la portion périphérique externe étant repliée hors du plan de la portion périphérique interne;

l'anneau de dégagement dans sa position axialement le plus à l'extérieur venant en butée avec les mâchoires de l'anneau en zigzag (22) dans leur position le plus à l'extérieur (Q) lorsqu'il mord dans un tube inséré (18),

caractérisé en ce que ladite position radialement le plus à l'extérieur (Q) est axialement légèrement à l'extérieur d'une position de pénétration maximale des mâchoires.

2. Jonction de tubes selon la revendication 1, dans laquelle la portion périphérique externe de la pièce d'accrochage (22) est maintenue à l'intérieur d'un anneau de guidage (14) présentant la butée (16) pour définir la position radialement le plus à l'extérieur de l'anneau de dégagement (25).

3. Jonction de tubes selon la revendication 2, dans laquelle ladite pièce (22) est maintenue par une déforamaion vers l'intérieur d'une portion d'extrémité de l'anneau de guidage (14).

Fig.1a.

Fig.1b.

Fig.2.

# Fig.3.

# Fig.4.

## Fig.5a.

## Fig.5b.

## Fig.6.